(19) Europäisches Patentamt / European Patent Office / Office européen des brevets

(11) EP 4 810 589 A1

(12) # EUROPEAN PATENT APPLICATION
published in accordance with Art. 153(4) EPC

(43) Date of publication:
**23.09.2026 Bulletin 2026/39**

(21) Application number: **25787028.7**

(22) Date of filing: **06.03.2025**

(51) International Patent Classification (IPC):
***C10G 2/00*** (2006.01) ***C10J 3/72*** (2006.01)
***C10J 3/58*** (2006.01) ***C01B 3/44*** (2006.01)
***C01B 3/48*** (2006.01)

(52) Cooperative Patent Classification (CPC):
**C01B 3/42; C01B 3/48; C10G 2/00; C10J 3/58; C10J 3/72**

(86) International application number:
**PCT/KR2025/002971**

(87) International publication number:
**WO 2025/216436 (16.10.2025 Gazette 2025/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.04.2024 KR 20240047825**

(71) Applicant: **SK Innovation Co., Ltd.**
**Seoul 03188 (KR)**

(72) Inventors:
- **JEON, Heejung**
  **Daejeon 34124 (KR)**
- **SON, Sungreal**
  **Daejeon 34124 (KR)**
- **YU, Seunghan**
  **Daejeon 34124 (KR)**
- **JEONG, Yongseong**
  **Daejeon 34124 (KR)**

(74) Representative: **Lorenz Seidler Gossel Part. mbB**
**Widenmayerstr. 23**
**80538 München (DE)**

(54) **METHOD AND SYSTEM FOR PRODUCING HYDROCARBONS**

(57) The present disclosure provides a method for producing hydrocarbons, comprising the steps of: (S1) heat treating organic waste in the presence of a heat transfer medium so as to generate a first mixed gas; (S2) steam reforming the first mixed gas in a first fluidized bed reactor so as to generate a second mixed gas; (S3) separating the second mixed gas into a first stream including carbon dioxide and a second stream including hydrogen and carbon monoxide; (S4) introducing, into a second fluidized bed reactor, the first stream separated out in step (S3), and converting same into carbon monoxide through reverse Boudouard reaction; (S5) mixing the second stream and the carbon monoxide obtained through conversion in step (S4), so as to produce a third mixed gas; (S6) generating syngas from the third mixed gas through a water-gas shift reaction; and (S7) generating hydrocarbons from the syngas through a catalytic reaction, wherein the heat transfer medium comprises 1-40 mass% of iron (Fe) and comprises 5-50 mass% of an alkaline earth metal oxide.

[FIG. 1]

1
100
110
200
210
CO
220
230
10
20
30
40
50
60
70
F-T syncrude
Olefin
(C2=, C3=)
211



Processed by Luminess, 75001 PARIS (FR)

## Description

[Technical Field]

The present invention relates to a method and a system for producing a hydrocarbon from an organic waste, and more particularly, to a method and a system for producing a hydrocarbon, which may improve a manufacturing yield of a hydrocarbon from an organic waste and minimize carbon dioxide emissions.

[Background Art]

A steel slag is a collective term for large amounts of by-products and wastes produced in the iron and steel industry. Its amount accounts for about 50% of the total steel and contains a large amount of recyclable resources such as iron, carbon, and limestone.

The steel slag is classified into a blast furnace slag and a steelmaking slag. The blast furnace slag contains almost no Fe, and the steelmaking slag including a converter slag and an electric furnace slag includes 10 to 30% by mass of iron (Fe), and also CaO from which impurities such as S and Cl may be removed at a level of 20 to 50% by mass. Since the steelmaking slag has a low iron content, its bulk density is 1600 $kg/m^3$.

A heat transfer medium in a gasification reactor used in a commercial gasification reaction mainly uses an oxide such as alumina, and in order to separate high-density impurities such as iron and glass incorporated with a raw material by a density difference, hollow alumina may also be used. The hollow alumina has a bulk density of 900 to 1300 $kg/m^3$ which is lower than that of common solid impurities, and since the solid impurities sink to the bottom, they may be easily removed in an operating system. However, since the hollow alumina does not act as a catalyst in the operating conditions, it has no composition change in reactants by an addition reaction such as separate cracking, has an empty interior so that the loss due to breakage caused by external impact is large, and is expensive so that regeneration is essential.

Thus, there is a need for a method and a system for producing a hydrocarbon, which may efficiently convert a syngas into a high value-added hydrocarbon by improving a manufacturing yield of the syngas which may be converted into a high value-added product during a gasification process of organic wastes, minimize carbon dioxide emissions, have less loss of a heat transfer medium during a gasification reaction, and reduce process operating costs.

Meanwhile, since organic wastes may seriously damage the environment due to decomposition when landfilled, they should be discarded through a prescribed treatment process after collecting them according to their properties when discarded. However, since simple disposal of the organic wastes requires securing treatment facilities and consuming a large amount of manpower and is more wasteful than productive, methods and technologies for recycling organic wastes have been developed in recent years. Representatively, a gasification process technology in which syngas is produced using organic wastes and converted into a high value-added product for energization may be mentioned.

The gasification process generally refers to a series of processes of reacting carbonaceous raw materials such as coal, organic wastes, and biomass under the supply of water vapor, oxygen, carbon dioxide, or a mixture thereof to convert the raw materials into syngas including hydrogen and carbon monoxide, in which the "syngas" refers to a mixed gas which is usually produced by a gasification reaction and includes hydrogen and carbon monoxide and may further include carbon dioxide and/or methane.

The gasification process technology has expanded to a technology of producing fuels and raw materials of various compounds, and for example, the syngas may be used as the raw material of a Fischer-Tropsch synthesis reaction to manufacture high value-added products such as light oil, heavy oil, diesel oil, wax, jet oil, and lubricant base oil. Besides, it is known that the technology may be applied to hydrogen power generation, ammonia manufacture, an oil refining process, and the like, using a hydrogen in the syngas which is the main product of the gasification process, and high value-added chemicals such as acetic acid, olefin, dimethyl ether, aldehyde, fuel, and an additive may be obtained, using methanol manufactured from the syngas. However, since the syngas produced from organic wastes has a very poor manufacturing yield, it is difficult to effectively produce a high value-added compound material from the syngas.

Recently, as a process for manufacturing syngas, a gasification process using a catalyst has been carried out, but the catalyst is deactivated by the formation of coke and the like in the gasification process, and process trouble occurs due to the deactivated catalyst during a continuous operation. In addition, for securing economic feasibility, relatively expensive catalysts need to be recovered, but in order to recover catalyst discharged in the state in which coke and the like are agglomerated, a plurality of subsequent processes (such as air burning) should be carried out, and thus, process efficiency is significantly deteriorated.

In addition, since the conventionally performed gasification process of organic wastes has a significantly low syngas manufacturing yield of 30% or less, the syngas being converted into a high value-added product, and thus, has poor productivity, there are limitations to utilizing or commercializing the process. Further, in terms of environmental protection, it is preferred to suppress CO2 emission, but since the gasification reaction product of organic wastes contains CO2 in addition to H2 and CO, more carbon dioxide is emitted as compared with the case of landfill or pyrolysis treatment,

and thus, the gasification process has a serious problem of causing rather increased environmental pollution.

Thus, there is a need for a method and a system for producing a hydrocarbon, which may improve a manufacturing yield of syngas which may be converted into a high value-added product during a gasification process of organic wastes and efficiently convert the syngas into a high value-added hydrocarbon, while minimizing carbon dioxide emissions.

[**Disclosure**]

[Technical Problem]

An object of the present disclosure is to provide a method and a system for producing a hydrocarbon from an organic waste, which have a significantly improved manufacturing yield of hydrocarbon.

Another object of the present disclosure is to provide a method and a system for producing a hydrocarbon, which have a significantly improved process efficiency.

Another object of the present disclosure is to provide a method and a system for producing a hydrocarbon, which may minimize carbon dioxide emissions.

Another object of the present disclosure is to improve a manufacturing yield of syngas during a gasification reaction.

Another object of the present disclosure is to reduce loss of a heat transfer medium during the gasification reaction.

Another object of the present disclosure is to remove impurities such as Cl, S, and N during the gasification reaction.

Another object of the present disclosure is to proceed with a catalytic reaction such as cracking and dehydrogenation during the gasification reaction.

Still another object of the present disclosure is to reduce gasification process operating costs.

[Technical Solution]

In one general aspect, a method for producing a hydrocarbon includes: (S1) heat treating an organic waste in the presence of a heat transfer medium to produce a first mixed gas; (S2) steam reforming the first mixed gas in a first fluidized bed reactor to produce a second mixed gas; (S3) separating the second mixed gas into a first stream including carbon dioxide and a second stream including hydrogen and carbon monoxide; (S4) introducing the first stream separated in (S3) into a second fluidized bed reactor and converting the first stream into carbon monoxide through a reverse Boudouard reaction; (S5) mixing the second stream and the carbon monoxide converted in (S4) to produce a third mixed gas; (S6) producing a syngas from the third mixed gas through a water-gas shift reaction; and (S7) producing a hydrocarbon from the syngas through a catalytic reaction, wherein the heat transfer medium includes 1 to 40% by mass of iron (Fe) and 5 to 50% by mass of an alkaline earth metal oxide.

In an exemplary embodiment according to the present disclosure, the first mixed gas may further include one or more selected from the group consisting of landfill gas, shale gas, refinery exhaust gas, and biogas.

In an exemplary embodiment according to the present disclosure, the first stream may include 50 vol% or more of carbon dioxide.

In an exemplary embodiment according to the present disclosure, (S2) may be performed under a composite catalyst in which an active metal is supported on a support.

In an exemplary embodiment according to the present disclosure, the active metal may include one or more selected from the group consisting of nickel, vanadium, iron, platinum, palladium, and ruthenium.

In an exemplary embodiment according to the present disclosure, the support may include one or more selected from the group consisting of silica, alumina, silica-alumina, carbon, zirconia, titania, zeolite, SAPO, and ALPO.

In an exemplary embodiment according to the present disclosure, (S2) may be performed at a temperature 700 to 1000°C.

In an exemplary embodiment according to the present disclosure, (S4) may be performed at a temperature of 600 to 1000°C and a pressure of 50 to 300 kPa.

In an exemplary embodiment according to the present disclosure, the syngas may include hydrogen and carbon monoxide, and a ratio between the hydrogen and the carbon monoxide may satisfy 1.8:1 to 2.2:1.

In an exemplary embodiment according to the present disclosure, the organic waste in (S1) may be one or more selected from the group consisting of waste plastic, solid waste, biomass, waste oil, waste tire, and standard plastic garbage bags.

In an exemplary embodiment according to the present disclosure, the method for producing a hydrocarbon may further include purifying the first mixed gas of (S1) before (S2).

In another general aspect, a system for producing a hydrocarbon includes: a pyrolysis reactor which heat treats an organic waste in the presence of a heat transfer medium to produce a first mixed gas; a first fluidized bed reactor which steam reforms the first mixed gas under a catalyst to produce a second mixed gas; a carbon dioxide separation unit which separates the second mixed gas into a first stream including carbon dioxide and a second stream including hydrogen and carbon monoxide; a second fluidized bed reactor which converts the first stream into carbon monoxide through a reverse Boudouard reaction; a gas mixing unit which mixes the second stream and carbon monoxide converted in the second fluidized bed reactor to produce a third mixed gas; a syngas production unit which converts the third mixed gas into a syngas through a water gas shift reaction; and a hydrocarbon conversion unit which converts the syngas into a hydrocarbon through a catalytic reaction, wherein the heat transfer medium includes 1 to 40% by mass of iron (Fe) and 5 to 50% by mass of an alkaline earth metal oxide.

In an exemplary embodiment according to the present disclosure, the system for producing a hydrocarbon may further include a cyclone connected between the first fluidized bed reactor and the carbon dioxide separation unit; a catalyst supply line which connects the cyclone and the second fluidized bed reactor; and a catalyst recirculation line which connects the second fluidized bed reactor and the first fluidized bed reactor, wherein the cyclone separates the second mixed gas and the catalyst discharged from the first fluidized bed reactor, supplies the second mixed gas to the carbon dioxide separation unit, and supplies the catalyst to the second fluidized bed reactor.

In an exemplary embodiment according to the present disclosure, the system for producing a hydrocarbon may further include a purification unit between the pyrolysis reactor and the first fluidized bed reactor.

[Advantageous Effects]

The method and the system for producing a hydrocarbon according to an exemplary embodiment of the present disclosure may significantly improve a manufacturing yield of a hydrocarbon from organic wastes through a gasification process using a heat transfer medium including 1 to 40% by mass of iron (Fe) and 5 to 50% by mass of an alkaline earth metal oxide.

The method and the system for producing a hydrocarbon according to an exemplary embodiment of the present disclosure may perform conversion into a hydrocarbon using a process and an apparatus appropriate for a C/O element ratio of a feed, and thus, may significantly improve manufacturing efficiency of a hydrocarbon.

The method and the system for producing a hydrocarbon according to an exemplary embodiment of the present disclosure may minimize carbon dioxide emissions in a process of producing a hydrocarbon.

According to an exemplary embodiment of the present disclosure, the manufacturing yield of syngas during a gasification reaction may be improved.

The method and the system for producing a hydrocarbon according to an exemplary embodiment of the present disclosure may reduce loss of a heat transfer medium during the gasification reaction.

The method and the system for producing a hydrocarbon according to an exemplary embodiment of the present disclosure may remove impurities such as Cl, S, and N during the gasification reaction.

The method and the system for producing a hydrocarbon according to an exemplary embodiment of the present disclosure may proceed with a catalytic reaction such as cracking and dehydrogenation during the gasification reaction.

The method and the system for producing a hydrocarbon according to an exemplary embodiment of the present disclosure may reduce gasification process operating costs.

The method and the system for producing a hydrocarbon according to an exemplary embodiment of the present disclosure may produce a hydrocarbon from an organic waste in an eco-friendly manner.

[Description of Drawings]

FIG. 1 is a schematic diagram showing a system for producing a hydrocarbon according to an exemplary embodiment of the present disclosure.

FIG. 2 is a schematic diagram showing a system for producing a hydrocarbon including a purification process according to an exemplary embodiment of the present disclosure.

FIG. 3 is a schematic diagram showing a system for producing a hydrocarbon including a catalyst circulation process according to an exemplary embodiment of the present disclosure.

[Best Mode]

The singular form of the term used herein may be intended to also include a plural form, unless otherwise indicated.

The numerical range used in the present specification includes all values within the range including the lower limit and the upper limit, all double limited values, and all possible combinations of the upper limits and the lower limits in the numerical range defined in different forms. Unless otherwise defined in the present specification, values which may be outside a numerical range due to experimental error or rounding off of a value are also included in the defined numerical range.

The term "comprise" mentioned in the present specification is an open-ended description having a meaning equivalent to the term such as "is/are provided", "contain", "have", or "is/are characterized", and does not exclude elements, materials, or processes which are not further listed.

The unit of % used in the present specification without particular mention refers to % by weight, unless otherwise defined.

As a conventional process for manufacturing syngas, a gasification process using a catalyst has been carried out, but due to the formation of coke and the like, the catalyst is deactivated to cause process trouble by the deactivated catalyst during a continuous operation. In addition, for securing economic feasibility, relatively expensive catalysts need to be recovered, but in order to recover catalyst discharged in the state in which coke is agglomerated, a plurality of subsequent processes (such as air burning) should be carried out, which significantly deteriorates process efficiency, and a large amount of carbon dioxide is emitted during the process causing environmental pollution. In addition, since the conventionally performed gasification process of organic wastes has a significantly low manufacturing yield of syngas of 30% or less and poor productivity, there were limits to conversion of the syngas into a high value-added product. Thus, the inventors of the present disclosure devised a method and a system which may efficiently produce hydrocarbons from organic wastes while minimizing carbon dioxide emissions.

The present disclosure provides a method for producing a hydrocarbon including: (S1) heat treating an organic waste in the presence of a heat transfer medium to produce a first mixed gas; (S2) steam reforming the first mixed gas in a first fluidized bed reactor to produce a second mixed gas; (S3) separating the second mixed gas into a first stream including carbon dioxide and a second stream including hydrogen and carbon monoxide; (S4) introducing the first stream separated in (S3) into a second fluidized bed reactor and converting the first stream into carbon monoxide through a reverse Boudouard reaction; (S5) mixing the second stream and the carbon monoxide converted in (S4) to produce a third mixed gas; (S6) producing a syngas from the third mixed gas through a water-gas shift reaction; and (S7) producing a hydrocarbon from the syngas through a catalytic reaction, wherein the heat transfer medium includes 1 to 40% by mass of iron (Fe) and 5 to 50% by mass of an alkaline earth metal oxide.

Since the method for producing a hydrocarbon according to the present disclosure may convert organic waste plastics into a syngas with high efficiency as compared with a conventional gasification process, a yield of a high value-added hydrocarbon converted from the syngas may be maximized. In addition, since carbon dioxide occurring in a process of producing a syngas may be converted into a raw material of a syngas, carbon dioxide emissions may be minimized in a hydrocarbon production process to prevent environmental pollution.

(S1) is a step of heat treating organic wastes in the presence of a heat transfer medium to produce a first mixed gas, in which a gasification reaction of the organic wastes may occur.

In an example, the organic waste in (S1) may be one or more selected from the group consisting of waste plastic, solid waste, biomass, waste oil, waste tire, and standard plastic garbage bags.

Specifically, in (S1), any one or more gasification reactions selected from the following Reaction Formulae 1 to 4 may be involved:

[Reaction Formula 1] $C_xH_y + H_2O \rightarrow H_2 + CO$ (water gasification reaction)

[Reaction Formula 2] $C_xH_y + CO_2 \rightarrow CO$ (carbon dioxide gasification reaction)

[Reaction Formula 3] $CO + 3H_2 \rightarrow CH_4 + H_2O$ (methanation reaction)

[Reaction Formula 4] $C_xH_y + O_2 \rightarrow CO_2$ (oxidation reaction).

In an exemplary embodiment according to the present disclosure, the first mixed gas may include methane, hydrogen, carbon monoxide, and carbon dioxide, and may also include various impurities such as nitrogen oxides, sulfur oxides, and hydrogen chloride.

In an exemplary embodiment according to the present disclosure, (S1) may be performed in the presence of a heat transfer medium. The heat transfer medium may act as a catalyst in (S1).

In an exemplary embodiment according to the present disclosure, the heat transfer medium may include iron (Fe) at 1% by mass or more, 5% by mass or more, 10% by mass or more, 15% by mass or more, 17% by mass or more, 20% by mass or more, 25% by mass or more and 40% by mass or less, 35% by mass or less, 30% by mass or less, 25% by mass or less, 21% by mass or less, 20% by mass or less, or a value between the numerical values, specifically at 1 to 40% by mass,

10 to 30% by mass, 15 to 25% by mass, or 17 to 21% by mass. Since the heat transfer medium includes iron (Fe) at the content described above, it acts as a catalyst in the gasification reaction and a catalytic reaction such as cracking and dehydrogenation may proceed, thereby increasing the manufacturing yield of syngas.

In an exemplary embodiment according to the present disclosure, the heat transfer medium may include the alkaline earth metal oxide at 5% by mass or more, 10% by mass or more, 20% by mass or more, 25% by mass or more, 26% by mass or more, 30% by mass or more, 40% by mass or more and 60% by mass or less, 50% by mass or less, 44% by mass or less, 40% by mass or less, 30% by mass or less, or a value between the numerical values, specifically at 5 to 50% by mass, 10 to 50% by mass, 20 to 50% by mass, 25 to 45% by mass, or 26 to 44% by mass. Since the heat transfer medium includes the alkaline earth metal oxide at the content described above, impurities such as Cl, S, and N may be removed during the gasification reaction.

The alkaline earth metal may include at least one selected from the group consisting of calcium (Ca), beryllium (Be), magnesium (Mg), strontium (Sr), barium (Ba), and radium (Ra).

In an exemplary embodiment according to the present disclosure, the heat transfer medium may include a magnesium oxide at 1% by mass or more, 2% by mass or more, 3% by mass or more, 4% by mass or more, 5% by mass or more, 6% by mass or more and 50% by mass or less, 40% by mass or less, 30% by mass or less, 20% by mass or less, 15% by mass or less, 10% by mass or less, 8% by mass or less, 7% by mass or less, 6% by mass or less, or a value between the numerical values, specifically at 1 to 50% by mass, 1 to 30% by mass, 1 to 10% by mass, or 4 to 8% by mass. Since the heat transfer medium includes the magnesium oxide at the content described above, impurities such as Cl, S, and N may be removed during the gasification reaction.

In an exemplary embodiment according to the present disclosure, the heat transfer medium may have a bulk density in a range of 650 to 2000 $kg/m^3$, 1000 to 2000 $kg/m^3$, 1300 to 1800 $kg/m^3$, or 1500 to 1700 $kg/m^3$. Since the heat transfer medium is within the range described above and has a lower density than a common solid impurity to sink to the bottom, it may be easily removed in an operating system.

In an exemplary embodiment according to the present disclosure, the heat transfer medium may have a particle size of 50 to 500 $\mu m$. By using the heat transfer medium having the particle size in the above range, particle fluidization may be easily performed during a gasification reaction.

In an exemplary embodiment according to the present disclosure, the heat transfer medium may be a steelmaking slag. Generally, a steel slag is a collective term for large amounts of by-products and wastes produced in the iron and steel industry. The steel slag is classified into a blast furnace slag and a steelmaking slag, and the steelmaking slag including a converter slag and an electric furnace slag may be used as the heat transfer medium in an exemplary embodiment according to the present disclosure. In the present specification, the "steelmaking slag" may refer to a steel slag produced in the process of manufacturing steel/alloy iron using scrap iron or pig iron in the converter or electric furnace. When the steelmaking slag is used as the heat transfer medium, process operation costs may be reduced due to the low price when compared with the case of using commonly used hollow alumina as the heat transfer medium. Besides, when compared with alumina, the steelmaking slag has excellent attrition characteristics and may decrease loss of the heat transfer medium in the gasification reaction.

In order to increase the methane content in the first mixed gas, the first mixed gas may further include one or more selected from the group consisting of landfill gas, shale gas, refinery exhaust gas, and biogas. Since the landfill gas, shale gas, refinery exhaust gas, and biogas include 40 vol% or more, specifically 50 vol% or more of methane and carbon dioxide, the first mixed gas further includes the gas described above, and thus, the manufacturing yield of syngas may be further improved through a steam reforming reaction and a reverse Boudouard reaction which are subsequent processes.

In an exemplary embodiment according to the present disclosure, a C/O element ratio of the first mixed gas may be 15 or less or 4 or less as the upper limit and 0.1 or more, 0.15 or more, 0.3 or more, specifically 0.1 to 15, and more specifically 0.3 to 4 as the lower limit.

The method for producing a hydrocarbon according to the present disclosure may perform a steam reforming reaction well, even when the first mixed gas includes a relatively high C/O element ratio as in the range described above. Specifically, since the catalyst used in the steam reforming reaction forms the circulation process described later, an effect of continuously performing the reaction regardless of the deactivation of the catalyst by coke which may be produced by steam reforming is exhibited.

In an example, a step of purifying the first mixed gas may be further included, after (S1).

The first mixed gas produced by heat treating organic wastes may include one or two or more impurities selected from the group consisting of tar, sulfur, nitrogen, and chlorine. Specifically, the first mixed gas may include water-soluble impurities such as $H_2S$, HCl, HOCl, and $NH_3$ and water-insoluble impurities such as tar. Since these impurities included in the first mixed gas may induce deactivation of the catalyst to reduce the efficiency of a subsequent process, when purification is performed after removing impurities from the first mixed gas, the efficiency of the entire process may be improved.

A method for purifying the first mixed gas may be one or a combination of two or more selected from the group consisting of use of a dust collection filter for high pressure, water washing, basic solution washing, passing through a

ceramic filter, and the like, but is not limited thereto. When the water washing or basic solution washing is used, water-soluble impurities such as $H_2S$, HCl, HOCl, and $NH_3$ included in the first mixed may be removed, and when the first mixed gas is passed through a ceramic filter or a dust collection filter, water-insoluble impurities such as tar, dust, and the like may be removed.

In an exemplary embodiment according to the present disclosure, (S2) is a step of steam reforming methane contained in the first mixed gas in a first fluidized bed reactor to produce a second mixed gas. In (S2), a reforming reaction according to the following Reaction Formula 5 may be involved:

[Reaction Formula 5] $CH_4 + H_2O \rightarrow CO + 3H_2$ (steam reforming reaction)

The reforming reaction of (S2) may be performed at a temperature of 600 to 1400 °C and a pressure of 30 to 2000 KPa.

(S2) may be operated without a catalyst, but may be operated using a catalyst in order to increase a reaction conversion rate at a low temperature of 600 to 700°C. The catalyst of (S2) may be a composite catalyst in which an active metal is supported on a support. The active metal may include one or more selected from the group consisting of nickel, vanadium, iron, platinum, palladium, and ruthenium. Usually, the active metal may be nickel, vanadium, or iron, and when an impurity content in a raw material such as organic wastes is low in the heat treatment process, precious metals such as platinum, palladium, or ruthenium may be used.

In an exemplary embodiment according to the present disclosure, the support may be a solid acid material such as an oxide or zeolite, and specifically, may be one or more selected from the group consisting of ZSM-5, ZSM-11, USY zeolite, ferrierite, mordenite, MCM-22, SUZ-4, L-type zeolite, silica, alumina, silica-alumina, carbon, zirconia, and titania.

The steam reforming reaction may be performed in the first fluidized bed reactor. In addition, the steam reforming reaction may be performed in the first fixed bed reactor. Herein, the reverse Boudouard reaction described later may be performed in the second fixed bed reactor.

Since (S2) is performed in the first fluidized bed reactor, the catalyst may be added to a reverse Boudouard reaction process as a subsequent process and form a circulation process of being resupplied after regeneration. Since the steam reforming reaction is performed in (S2), coke is accumulated in the catalyst to deactivate a catalytic reaction, but since (S2) may be performed in the first fluidized bed reactor to perform a circulation process of regenerating and resupplying a catalyst, a continuous reforming reaction is allowed in spite of steam reforming.

(S3) is a step of separating the second mixed gas into a first stream including carbon dioxide and a second stream including hydrogen and carbon monoxide.

In an example, a method for separating the second mixed gas into a first stream and a second stream is not limited as long as it is known in the art, but in the present disclosure, the separation may be performed using a carbon dioxide separation unit, and the carbon dioxide separation unit may be an amine scrubber. Usually, the amine scrubber binds and removes carbon dioxide through an amine-based material, and since it may separate components such as carbon dioxide and hydrogen sulfide from gas stream and recover gas containing hydrogen, carbon monoxide, or inert gas, when the amine scrubber is used, the first mixed gas may be separated into the first stream and the second stream.

As another example, the carbon dioxide separation unit may be a carbon capture and storage (CCS) unit. When the CCS unit is used for separation of carbon dioxide, it may adsorb and separate carbon dioxide using an adsorbent including any one or two or more selected from calcium oxide, calcium hydroxide, dolomite, limestone, or trona, and thus, the second mixed gas may be separated into the first and second streams using the carbon capture and storage (CCS) unit.

The first stream may include carbon dioxide at 40 vol% or more, 50 vol% or more, or 60 vol% or more as the lower limit and 99 vol% or less, 90 vol% or less, 80 vol% or less, or 70 vol% or less as the upper limit. Specifically, the first stream may include 40 to 99 vol%, more specifically 50 to 80 vol% of carbon dioxide. In the carbon dioxide separation unit, when carbon dioxide is captured and then separated, in order to separate carbon dioxide to a high purity, a regeneration tower in which carbon dioxide separation from an adsorbing material occurs should be designed with a high stage, and thus, more energy is consumed. Therefore, since the first stream includes carbon dioxide in the range described above, a carbon dioxide separation process may be performed under slightly milder conditions.

(S4) is a step of converting the first stream separated in (S3) into carbon monoxide through a reverse Boudouard reaction in a second fluidized bed reactor. Since carbon dioxide contained in the first stream is further converted into carbon monoxide through the reverse Boudouard reaction, environmental pollution may be prevented in terms of decreasing emitted carbon dioxide, while maximizing the yield of syngas. The reverse Boudouard reaction may involve the following Reaction Formula 6:

[Reaction Formula 6] $C + CO_2 \rightarrow 2CO$.

(S4) may be performed at a temperature of 600 to 1000°C and a pressure of 50 to 300 KPa.

In an example, a carbon source in the reverse Boudouard reaction in (S4) may be a catalyst in which coke supplied in (S2) is deposited, and if necessary, the reaction may be performed by supplying activated carbon and the like from the outside.

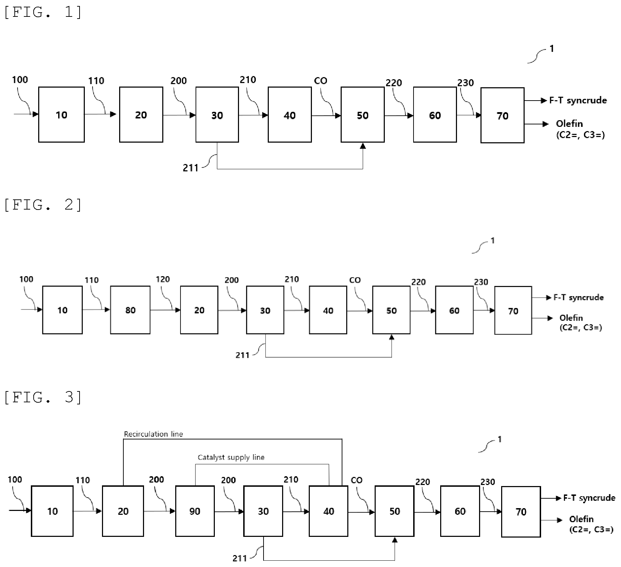

Referring to FIG. 3, the second syngas discharged from the fluidized bed reactor 20 is separated from the catalyst by a cyclone 90 and supplied to a second fluidized bed reactor 40 in which the reverse Boudouard reaction is performed by a catalyst supply line. The catalyst reacts as a carbon source of the reverse Boudouard reaction and is regenerated in the second fluidized bed reactor 40, and the regenerated catalyst is supplied again to the first fluidized bed reactor 20 through a recirculation line. When the catalyst circulation process is used, the methane reforming reaction may be continuously performed, the carbon source required in the reverse Boudouard reaction does not need to be supplied from the outside, and thus, an economical process may be performed.

That is, since the first fluidized bed reactor and the second fluidized bed reactor in which a methane reforming reaction and a reverse Boudouard reaction are performed form circulation process while the yield of the syngas may be maximized through the methane reforming reaction and the reverse Boudouard reaction in the present disclosure, a both continuous and economical process operation according to the catalyst regeneration may be implemented.

(S5) is a step of mixing the second stream separated in the carbon dioxide separation unit and carbon monoxide converted by the reverse Boudouard reaction in (S4) to produce a third mixed gas.

The third mixed gas may include hydrogen and carbon monoxide.

(S6) is a process of adjusting a ratio between carbon monoxide and hydrogen in the third mixed gas through a water gas shift reaction to produce a syngas. The third mixed gas may be converted through the water gas shift reaction so as to satisfy a ratio of hydrogen : carbon monoxide appropriate for a catalytic reaction as a subsequent process. The water gas shift reaction may involve the following Chemical Formula 7:

[Chemical Formula 7] $CO + H_2O \rightarrow H_2 + CO_2$.

The water gas shift reaction may be performed under a catalyst including Fe and Cr. The water gas shift reaction may be performed at a temperature of 100 to 400°C, specifically 100 to 300°C, and at 20 bar to 80 bar, specifically 25 to 70 bar.

The syngas produced by the water gas shift reaction may have a ratio of hydrogen : carbon monoxide of 1.5 to 3:1, specifically 1.9 to 2.1:1. Since the ratio of hydrogen : carbon monoxide in the syngas satisfies the range described above, a catalytic reaction process which is a subsequent process may be performed well.

(S7) is a step of converting the syngas produced in (S6) into a hydrocarbon oil fraction, in which the syngas may be converted into an appropriate hydrocarbon oil fraction by a catalytic reaction.

The catalytic reaction is not limited as long as it may convert the syngas into a hydrocarbon oil fraction, but specifically, may be a Fischer-Tropsch reaction or a methanol and olefin conversion reaction.

In an example, when the catalytic reaction of (S7) is the Fischer-Tropsch reaction, a reaction involving the following Chemical Formula 8 may be performed using the syngas produced in (S6) as a raw material:

[Chemical Formula 8] $nCO + 2nH_2 \rightarrow C_nH_{2n} + nH_2O$.

The Fischer-Tropsch reaction may be performed under a catalyst including cobalt, nickel, or iron, may include alumina, silica, titania, or the like as a support, and may include a precious metal such as Pt, Ru, and Re as a cocatalyst.

The Fischer-Tropsch reaction may be performed at a temperature of 100 to 500°C, specifically 200 to 350°C, and at a pressure of 10 to 50 atm or 10 to 30 atm.

In an example, when the catalytic reaction of (S7) is a methanol and olefin conversion reaction, (S7) may include a reaction of converting the syngas into methanol; and converting methanol into olefin.

The reaction of converting the syngas into methanol may involve the following Chemical Formula 9:

[Chemical Formula 9] $CO + 2H_2 \rightarrow CH_3OH$.

In an example, the reaction of converting the syngas into methanol may be performed under a Cu-based catalyst. Specifically, the Cu-based catalyst may be a Cu-based methanol-based synthetic catalyst, and as a support of the Cu-based catalyst, one or more selected from the group consisting of $SiO_2$, $ZrO_2$, $Ga_2O_3$ $Al_2O_3$, MgO, and $TiO_2$ may be used. Specifically, the Cu-based methanol-based synthetic catalyst may be $Cu/Zn/Al_2O_3$.

The reaction of converting the syngas into methanol may be performed at 400 to 600°C, specifically 430 to 530 °C, and at 0.1 to 10 MPa, specifically 0.1 to 5 MPa.

The reaction of converting methanol into olefin may be performed under a zeolite-based catalyst or an $AlPO_4$-based molecular sieve catalyst. Specifically, the zeolite-based catalyst may be ZSM-5, and the $AlPO_4$-based catalyst may be a silicoaluminaphosphate (SAPO) molecular sieve catalyst, specifically, one or more selected from SAPO-5, SAPO-8,

SAPO-11, SAPO-16, SAPO-17, SAPO-18, SAPO-20, SAPO-31, SAPO-34, SAPO-35, SAPO-44, and SAPO-46.

The reaction of converting methanol into olefin may be performed at a temperature of 200 to 600°C, specifically 300 to 500°C and at a pressure of 1 to 10 bar, specifically 1 to 5 bar.

In addition, the present disclosure provides a system for producing a hydrocarbon. The description of the method for producing a hydrocarbon may be applied identically to the description of the system for producing a hydrocarbon within the overlapping range.

The present disclosure provides a system for producing a hydrocarbon including: a pyrolysis reactor which heat treats an organic waste in the presence of a heat transfer medium to produce a first mixed gas; a first fluidized bed reactor which steam reforms the first mixed gas under a catalyst to produce a second mixed gas; a carbon dioxide separation unit which separates the second mixed gas into a first stream including carbon dioxide and a second stream including hydrogen and carbon monoxide; a second fluidized bed reactor which converts the first stream into carbon monoxide through a reverse Boudouard reaction; a gas mixing unit which mixes the second stream and carbon monoxide converted in the second fluidized bed reactor to produce a third mixed gas; a syngas production unit which converts the third mixed gas into a syngas through a water gas shift reaction; and a hydrocarbon conversion unit which converts the syngas into a hydrocarbon through a catalytic reaction, wherein the heat transfer medium includes 1 to 40% by mass of iron (Fe) and 5 to 50% by mass of an alkaline earth metal oxide.

The system for producing a hydrocarbon 1 according to the present disclosure may use a fluidized bed reactor when a heat treatment, a steam reforming reaction, and a reverse Boudouard reaction are performed in the presence of a heat transfer medium, thereby producing a syngas 230 and a hydrocarbon economically and significantly decreasing carbon dioxide emissions.

Referring to FIG. 1, the organic waste 100 is introduced into a pyrolysis reactor 10 in the presence of the heat transfer medium, is heat treated, and produces the first mixed gas 110. The first mixed gas 110 is introduced to the first fluidized bed reactor 20, and is converted into the second mixed gas 220 by the dry reforming reaction.

In an example, the system for producing a hydrocarbon may further include a purification unit 80 connected between the pyrolysis reactor 10 and the first fluidized bed reactor 20. Specifically, referring to FIG. 2, the first mixed gas 110 flows in the purification unit 80 to remove impurities, and the first mixed gas 120 with impurities removed is introduced to the first fluidized bed reactor 20 to perform a methane reforming reaction.

The purification unit 80 may remove water-soluble impurities such as $H_2S$, HCl, HOCl, and $NH_3$ by being supplied with the first mixed gas 110 from the pyrolysis reactor 10 by including a sprayer which sprays a liquid and bringing the first mixed gas 110 and a weakly basic solution including water or sodium carbonate into contact, may remove dust using a dust collection filter for high pressure, or may remove water-insoluble impurities such as tar by including a ceramic filter.

The second mixed gas 200 is introduced to a carbon dioxide separation unit 30 and is separated into the first stream 210 including carbon dioxide and the second stream 211 including hydrogen and carbon monoxide. The second stream is supplied directly to a gas mixing unit 50, and the first stream is supplied to the second fluidized bed reactor 40 and converted into carbon monoxide through the reverse Boudouard reaction.

In an example, a cyclone connected between the first fluidized bed reactor and the carbon dioxide separation unit; a catalyst supply line which connects the cyclone and the second fluidized bed reactor; and a catalyst recirculation line which connects the second fluidized bed reactor and the first fluidized bed reactor are further included, wherein the cyclone may separate the second mixed gas and the catalyst discharged from the fluidized bed reforming reactor, supply the second mixed gas to the carbon dioxide separation unit, and supply the catalyst to the second fluidized bed reactor.

Since in the system for producing a hydrocarbon of the present disclosure, the first fluidized bed reactor and the second fluidized bed reactor described above form a circulation process, a continuous process operation due to catalyst regeneration is allowed. In addition, since the catalyst in which coke supplied from the first fluidized bed reactor is deposited may be used without separately supplying a carbon source for performing the reverse Boudouard reaction to the second fluidized bed reactor, a more economical process operation is allowed.

The gas mixing unit 50 mixes the second stream 211 and carbon monoxide converted in the second fluidized bed reactor 40 to produce a third mixed gas 220. The third mixed gas 220 is supplied to the water gas conversion unit 60, and adjusts a ratio of hydrogen : carbon monoxide in the third mixed gas through a water gas conversion reaction to convert it into a syngas 230.

The syngas 230 may be introduced to the hydrocarbon conversion unit 70, converted into a hydrocarbon through a Fisher-Tropsch reaction or a methanol and olefin conversion reaction, and recovered as a high value-added oil fraction.

In an example, when the hydrocarbon conversion unit 70 performs a methanol and olefin conversion reaction, the hydrocarbon conversion unit 70 may include a methanol conversion unit which is supplied with the syngas 230 and converts the syngas into methanol and an olefin conversion unit which is supplied with methanol from the methanol conversion unit and converts methanol into an olefin.

In an example, the system for producing a hydrocarbon may be connected to a hydrocarbon conversion unit 70 and further include a separation step of separating the produced hydrocarbon into fractions at each boiling point through distillation.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

(Example 1)

1000 g of urban solid wastes were added to a pyrolysis reactor, water vapor was introduced under the conditions of a temperature of 800°C, a pressure of 4 bar, an operating time of 120 minutes, and 3L/$g_{cat}$h, in the presence of a steelmaking slag having a specific gravity of 2.63 and a bulk density of1620 kg/$m^3$, and a heat treatment was performed to recover a first mixed gas having a C/O element ratio of 0.7. The composition of the steelmaking slag is shown in the following Table 1:

[Table 1]

| Composition of steelmaking slag | % by mass |
|---|---|
| $SiO_2$ | 21.5 |
| CaO | 44.1 |
| $Al_2O_3$ | 3.5 |
| Fe | 17.0 |
| MgO | 7.7 |
| MnO | 3.7 |
| $TiO_2$ | 2.5 |

The first mixed gas was cooled, added to a purification unit (wet scrubber), and treated at 70°C and 100 KPa to remove impurities, and a purified first mixed gas was recovered. As a result of treating the first mixed gas through the wet scrubber, impurity gas such as $NH_3$, HCl, $H_2S$, and COS was not analyzed, and it was confirmed that impurities were effectively removed.

The first mixed gas from which impurities had been removed was supplied to a first fluidized bed reactor provided with a Ni/$Al_2O_3$ catalyst at a space velocity of 2 L/$g_{cat}$·h, thereby producing a second mixed gas through steam reforming.

The Ni/$Al_2O_3$ fluidized bed catalyst was prepared by the following procedures. 1 part by weight of formic acid was added to a mixed solution of 10 parts by weight of pseudo-boehmite alumina and 95 parts by weight of nickel nitrate hexahydrate based on 100 parts by weight of water with stirring, and the reaction was performed for 3 hours to perform gelation, thereby preparing a precursor gel. 30 parts by weight of clay and 1.5 parts by weight of a MgO oxide were added and mixed with a homogenizer to prepare a solid mixture, which was mixed with the precursor gel, and then 10 parts by weight of colloidal silica (Ludox AS40, Aldrich) was added, 5 parts by weight of water was further added, and vigorous stirring was performed to prepare a composite catalyst sol. The composite catalyst sol was spray dried to prepare a fluidized bed catalyst.

The first fluidized bed reactor was filled with 100 g of the Ni/$Al_2O_3$ catalyst, reduction was performed for 2 hours while $H_2$ was supplied at a flow rate of 3.03 Nl/min at 900°C, and then a steam reforming reaction was performed in an operating conditions of $CH_4/H_2O$ = 3 with a throughput of 2.0 L/$g_{cat}$·h while the purified first mixed gas was introduced at a total flow rate of 3.33 Nl/min, thereby recovering the second mixed gas.

The catalyst was separated from the second mixed gas of the first fluidized bed reactor using a cyclone, $CO_2$ was separated using an amine scrubber, and a second stream from which the catalyst and carbon dioxide had been separated was recovered. Specifically, the second mixed gas was introduced to the first amine scrubber to capture $CO_2$ in a 12 wt% aqueous amine solution (amine solution) in which monoethanolamine (MEA) was dissolved at 50°C, and uncaptured gas was recovered as a second stream. The amine aqueous solution of the first amine scrubber was introduced to the second amine scrubber and separated into an amine aqueous solution and $CO_2$ at 100°C, and $CO_2$ was recovered as a first stream.

The recovered first stream was introduced to the second fluidized bed reactor and converted into carbon monoxide through the reverse Boudouard reaction. The reverse Boudouard reaction was performed by supplying the first stream to the second fluidized bed reactor simultaneously with continuous supply of high-purity graphite, in the operating conditions of 750°C and a throughput of 2.0 L/$g_{cat}$·h under a Ni/$Al_2O_3$ waste catalyst used in the first fluidized bed reactor. The catalyst activated by removing coke through the reverse Boudouard reaction was added again to the first fluidized bed

reactor through a recirculation line. Unconverted $CO_2$ after the reverse Boudouard reaction was separately recovered by the amine scrubber.

The carbon monoxide converted from the first stream and the second stream were introduced to a mixing unit and were mixed at 200°C to produce a third mixed gas.

The third mixed gas was introduced to a syngas production unit, and a syngas having a mole ratio of $H_2$:CO=2:1 was produced through a water gas shift reaction performed in the operating conditions of 165°C, 35 bar, and a throughput of 1.4 L/$g_{cat}$·h under a Cu/Zn/$Al_2O_3$ catalyst.

The syngas was passed through the amine scrubber to remove carbon dioxide and supplied to a hydrocarbon conversion unit, and a hydrocarbon fraction was recovered by setting an injection speed so that the space velocity was 5000 L/$kg_{cat}$·h and a volume of carbon monoxide : hydrogen : argon was 63.2:31.3:5.5 and performing a Fischer-Tropsch reaction at a reaction temperature of 300°C and a pressure of 10 bar for 60 hours, under a Co/ZnO(Cobalt Zinc oxide)-based catalyst.

(Comparative Example 1)

A hydrocarbon was produced in the same manner as in Example 1, except that alumina beads were used as the heat transfer medium instead of the steelmaking slag.

(Experimental Example 1) Analysis of gas composition

When the hydrocarbon was prepared by the methods of Example 1 and Comparative Example 1, the compositions of the gases included in the first mixed gas with impurities removed, the second mixed gas, the third mixed gas, and the syngas were analyzed and are shown in the following Table 2, and the composition of the main components included in the hydrocarbon prepared therefrom was analyzed and is shown in Table 3. Gas composition analysis was performed through gas chromatography (GC), and the total amount of gas was confirmed through a gas meter. Specifically, quantification was performed by GC to calculate selectivity by gas, and each composition by gas was analyzed by the total amount of gas confirmed by the gas meter.

[Table 2]

| | Composition | Example 1 | Comparative Example 1 |
|---|---|---|---|
| First mixed gas with impurities removed (%) | $H_2$ | 9.5 | 32 |
| | CO | 28.4 | 16 |
| | $CO_2$ | 40.5 | 40 |
| | $CH_4$ | 21.6 | 11 |
| Second mixed gas (mol%) | $H_2$ | 62.7 | 51.8 |
| | CO | 60.8 | 41.8 |
| | $CO_2$ | 29.5 | 25.7 |
| | $CH_4$ | 0.2 | 0.2 |
| Second stream (mol%) | $H_2$ | 62.7 | 51.8 |
| | CO | 60.8 | 41.8 |
| | $CO_2$ | 0.2 | 0.2 |
| | $CH_4$ | 0.2 | 0.2 |
| Third mixed gas (mol%) | $H_2$ | 62.7 | 51.8 |
| | CO | 112.7 | 93.0 |
| | $CO_2$ | 0.1 | 0.1 |
| | $CH_4$ | 0.2 | 0.2 |
| Syngas | $H_2$ | 116.9 | 96.5 |

(continued)

| | Composition | Example 1 | Comparative Example 1 |
|---|---|---|---|
| (mol%) | CO | 58.5 | 48.3 |
| | $CO_2$ | 54.2 | 44.8 |
| | CH4 | N/D | N/D |

[Table 3]

| | Example 1 | Comparative Example 1 |
|---|---|---|
| Gas (g) | 703 | 585 |
| Liquid, Wax (g) | 449 | 382 |
| $H_2O$ (g) | 689 | 579 |

As shown in Tables 2 and 3, when a hydrocarbon was produced by performing a gasification reaction in the presence of a steelmaking slag according to the method of Example 1, the production amount of the syngas and the hydrocarbon produced therefrom was increased, and high-quality syngas was able to be obtained.

Specifically, the syngas of Example 1 produced by performing the steam reforming reaction, the reverse Boudouard reaction, and the water gas shift reaction sequentially was measured to have high contents of $H_2$ and CO content of 116.9 mol% and 58.5 mol%, respectively. In addition, since the syngas manufacturing yield was improved, a liquid yield of the hydrocarbon prepared using the syngas was as high as 449 g. Thus, high value-added syngas and hydrocarbon may be produced from a mixed gas formed by pyrolysis of organic wastes with a high yield from the method for producing a hydrocarbon of the present disclosure, and also, since greenhouse gas emissions are reduced, an excellent environmental pollution prevention effect is shown.

However, in Comparative Example 1, since the gasification reaction was performed in the presence of alumina instead of the steelmaking slag, the amount of syngas obtained was small, and the amount of the hydrocarbon fraction obtained was also small at 382 g as compared with Example 1.

That is, when a hydrocarbon was produced by performing the gasification in the presence of the steelmaking slag as in the method according to the present disclosure, process efficiency is improved, and thus, it was confirmed that the syngas and the hydrocarbon may be produced at high yields.

(Experimental Example 2) Attrition index analysis

Cold attrition index analysis of the steelmaking slag of Example 1 and alumina beads of Comparative Example 1 was performed in accordance with ASTM D5757. Only particles of 45 to 150 $\mu$m were separated before the experiment, the attrition index was analyzed, and calculation was performed by the following formula. The results are shown in the following Table 4.

Attrition index = [Amount of increase in microparticles (< 20 um) before and after experiment] / initial amount of sample] $\times$ 100 (%)

[Table 4]

| | Example 1 | Comparative Example 1 |
|---|---|---|
| Attrition index | 2.1 | 5.7 |

As a result of the analysis, the attrition index of alumina beads was measured as 5.7, while the attrition index of the steelmaking slag was measured as 2.1, and it was confirmed that since the attrition characteristic of the steelmaking slag was better than that of alumina, when the steelmaking slag is used as the heat transfer medium, loss during operation may be decreased.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and

changes may be made by those skilled in the art to which the present disclosure pertains from the description.

Therefore, the spirit of the present disclosure should not be limited to the above-described exemplary embodiments, and the following claims as well as all modifications equal or equivalent to the claims are intended to fall within the scope and spirit of the disclosure.

| | |
|---|---|
| 1 | System for producing hydrocarbon |
| 10 | Pyrolysis reactor |
| 20 | First fluidized bed reactor |
| 30 | Carbon dioxide separation unit |
| 40 | Second fluidized bed reactor |
| 50 | Gas mixing unit |
| 60 | Syngas production unit |
| 70 | Hydrocarbon conversion unit |
| 80 | Purification unit |
| 90 | Cyclone |
| 100 | Organic waste |
| 110 | First mixed gas |
| 120 | First mixed gas with impurities removed |
| 200 | Second mixed gas |
| 210 | First stream |
| 211 | Second stream |
| 220 | Third mixed gas |
| 230 | Syngas |

## Claims

**1.** A method for producing a hydrocarbon, the method comprising:

(S1) heat treating an organic waste in the presence of a heat transfer medium to produce a first mixed gas;
(S2) steam reforming the first mixed gas in a first fluidized bed reactor to produce a second mixed gas;
(S3) separating the second mixed gas into a first stream including carbon dioxide and a second stream including hydrogen and carbon monoxide;
(S4) introducing the first stream separated in (S3) into a second fluidized bed reactor and converting the first stream into carbon monoxide through a reverse Boudouard reaction;
(S5) mixing the second stream and the carbon monoxide converted in (S4) to produce a third mixed gas;
(S6) producing a syngas from the third mixed gas through a water-gas shift reaction; and
(S7) producing a hydrocarbon from the syngas through a catalytic reaction,
wherein the heat transfer medium includes 1 to 40% by mass of iron (Fe) and 5 to 50% by mass of an alkaline earth metal oxide.

**2.** The method for producing a hydrocarbon of claim 1, wherein the first mixed gas further includes one or more selected from the group consisting of landfill gas, shale gas, refinery exhaust gas, and biogas.

**3.** The method for producing a hydrocarbon of claim 1, wherein the first stream includes 50 vol% or more of carbon dioxide.

**4.** The method for producing a hydrocarbon of claim 1, wherein (S2) is performed under a composite catalyst in which an active metal is supported on a support.

**5.** The method for producing a hydrocarbon of claim 4, wherein the active metal includes one or more selected from the group consisting of nickel, vanadium, iron, platinum, palladium, and ruthenium.

**6.** The method for producing a hydrocarbon of claim 5, wherein the support includes one or more selected from the group consisting of silica, alumina, silica-alumina, carbon, zirconia, titania, zeolite, SAPO, and ALPO.

**7.** The method for producing a hydrocarbon of claim 1, wherein (S2) is performed at a temperature of 700 to 1000°C.

**8.** The method for producing a hydrocarbon of claim 1, wherein (S4) is performed at a temperature of 600 to 1000°C and a pressure of 50 to 300 KPa.

**9.** The method for producing a hydrocarbon of claim 1, wherein the syngas includes hydrogen and carbon monoxide, and a ratio between the hydrogen and the carbon monoxide satisfies 1.8:1 to 2.2:1.

**10.** The method for producing a hydrocarbon of claim 1, wherein the organic waste in (S1) is one or more selected from the group consisting of waste plastic, solid waste, biomass, waste oil, waste tire, and standard plastic garbage bags.

**11.** The method for producing a hydrocarbon of claim 1, further comprising purifying the first mixed gas of (S1), before (S2).

**12.** A system for producing a hydrocarbon comprising:

a pyrolysis reactor which heat treats an organic waste in the presence of a heat transfer medium to produce a first mixed gas;
a first fluidized bed reactor which steam reforms the first mixed gas under a catalyst to produce a second mixed gas;
a carbon dioxide separation unit which separates the second mixed gas into a first stream including carbon dioxide and a second stream including hydrogen and carbon monoxide;
a second fluidized bed reactor which converts the first stream into carbon monoxide through a reverse Boudouard reaction;
a gas mixing unit which mixes the second stream and carbon monoxide converted in the second fluidized bed reactor to produce a third mixed gas;
a syngas production unit which converts the third mixed gas into a syngas through a water gas shift reaction; and
a hydrocarbon conversion unit which converts the syngas into a hydrocarbon through a catalytic reaction,
wherein the heat transfer medium includes 1 to 40% by mass of iron (Fe) and 5 to 50% by mass of an alkaline earth metal oxide.

**13.** The system for producing a hydrocarbon of claim 12, further comprising:

a cyclone connected between the first fluidized bed reactor and the carbon dioxide separation unit;
a catalyst supply line which connects the cyclone and the second fluidized bed reactor; and
a catalyst recirculation line which connects the second fluidized bed reactor and the first fluidized bed reactor,
wherein the cyclone separates the second mixed gas and the catalyst discharged from the first fluidized bed reactor, supplies the second mixed gas to the carbon dioxide separation unit, and supplies the catalyst to the second fluidized bed reactor.

**14.** The system for producing a hydrocarbon of claim 12, further comprising a purification unit between the pyrolysis reactor and the first fluidized bed reactor.

[FIG. 1]

1
100
110
200
210
CO
220
230
10
20
30
40
50
60
70
F-T syncrude
Olefin
(C2=, C3=)
211

[FIG. 2]

1
100
110
120
200
210
CO
220
230
10
80
20
30
40
50
60
70
F-T syncrude
Olefin
(C2=, C3=)
211

[FIG. 3]

Recirculation line
Catalyst supply line
1
100
110
200
200
210
CO
220
230
10
20
90
30
40
50
60
70
F-T syncrude
Olefin
(C2=, C3=)
211

**INTERNATIONAL SEARCH REPORT**

International application No.
**PCT/KR2025/002971**

**A. CLASSIFICATION OF SUBJECT MATTER**

**C10G 2/00**(2006.01)i; **C10J 3/72**(2006.01)i; **C10J 3/58**(2006.01)i; **C01B 3/44**(2006.01)i; **C01B 3/48**(2006.01)i

According to International Patent Classification (IPC) or to both national classification and IPC

**B. FIELDS SEARCHED**

Minimum documentation searched (classification system followed by classification symbols)

C10G 2/00(2006.01); B01J 21/02(2006.01); B01J 23/78(2006.01); B01J 27/185(2006.01); B01J 27/187(2006.01); B01J 8/00(2006.01); C10L 3/08(2006.01); C10L 3/10(2006.01); C25B 1/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐기물(waste), 합성가스(syngas), 탄화수소(hydrocarbon)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0105823 A (KOREA ADVANCED INSTITUTE OF SCIENCE AND TECHNOLOGY) 01 October 2018 (2018-10-01)<br>See claim 1; and paragraphs [0052]-[0092]. | 1-14 |
| Y | EP 3501640 A1 (INDUSTRIAL TECHNOLOGY RESEARCH INSTITUTE) 26 June 2019 (2019-06-26)<br>See abstract; and claim 14. | 1-14 |
| Y | KR 10-2019-0027762 A (KOREA RESEARCH INSTITUTE OF CHEMICAL TECHNOLOGY) 15 March 2019 (2019-03-15)<br>See abstract; claim 8; and paragraphs [0051]-[0053]. | 4-6 |
| Y | KR 10-2023-0138740 A (KOREA INSTITUTE OF ENERGY RESEARCH) 05 October 2023 (2023-10-05)<br>See abstract; claim 1; and figure 1. | 13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 June 2025** | **05 June 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2025/002971**

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0090311 A (JOHNSON MATTHEY DAVY TECHNOLOGIES LIMITED) 21 June 2023 (2023-06-21)<br>See claims 1-18. | 1-14 |

Form PCT/ISA/210 (second sheet) (July 2022)

**INTERNATIONAL SEARCH REPORT**
**Information on patent family members**

International application No.
**PCT/KR2025/002971**

| Patent document cited in search report | | | Publication date (day/month/year) | Patent family member(s) | | | Publication date (day/month/year) |
|---|---|---|---|---|---|---|---|
| KR | 10-2018-0105823 | A | 01 October 2018 | KR | 10-2097283 | B1 | 06 April 2020 |
| EP | 3501640 | A1 | 26 June 2019 | CN | 109939706 | A | 28 June 2019 |
| | | | | CN | 109939706 | B | 18 March 2022 |
| | | | | EP | 3501640 | B1 | 19 April 2023 |
| KR | 10-2019-0027762 | A | 15 March 2019 | KR | 10-2178146 | B1 | 13 November 2020 |
| | | | | WO | 2019-050335 | A1 | 14 March 2019 |
| KR | 10-2023-0138740 | A | 05 October 2023 | KR | 10-2750305 | B1 | 09 January 2025 |
| KR | 10-2023-0090311 | A | 21 June 2023 | CN | 116018317 | A | 25 April 2023 |
| | | | | EP | 4229155 | A1 | 23 August 2023 |
| | | | | JP | 2023-545341 | A | 30 October 2023 |
| | | | | US | 2023-0295517 | A1 | 21 September 2023 |
| | | | | WO | 2022-079407 | A1 | 21 April 2022 |

Form PCT/ISA/210 (patent family annex) (July 2022)